# DEMANDE DE BREVET EUROPEEN

(11) **EP 1 995 531 A1**
(43) Date de publication de la demande: **26.11.2008**
(21) Numéro de dépôt: 08356069.8
(22) Date de dépôt: 20.05.2008
(51) Int. Cl.: F24F 13/06, F24F 13/02, F16L 41/08

(54) **Système de raccordement entre un organe d'extraction ou d'insufflation d'air dans une pièce et une installation de ventilation d'un bâtiment**

(30) Priorité: 24.05.2007 FR 0703682
(71) Demandeur: ALDES AERAULIQUE, 69200 Venissieux Cedex (FR)
(72) Inventeur: Didierjean, Manuel, 69440 Mornant (FR)
(74) Mandataire: Goreaud, Alexandra

(57) **Abrégé**

Le système de raccordement comprend :
- un conduit semi-rigide (11) qui, connecté à l'installation de ventilation, et à l'intérieur d'un orifice ménagé dans une paroi d'une pièce, va recevoir l'organe d'extraction ou d'insufflation d'air ;
- un dispositif de liaison (12) entre le conduit (11) et la paroi de la pièce, comprenant un manchon (18) équipé de moyens d'assemblage au conduit (11) avec blocage axial vis-à-vis de celui-ci. Le dispositif de liaison (12) comprend des premiers et des seconds moyens de butée pour empêcher, en position montée, le déplacement du dispositif (12) axialement vers l'avant et vers l'arrière de la paroi.

## Description

La présente invention concerne un système de raccordement entre un organe d'extraction ou d'insufflation d'air dans une pièce d'un bâtiment, monté dans un orifice ménagé dans une paroi de ladite pièce, et une installation de ventilation du bâtiment.

Une installation de ventilation d'un bâtiment comprend, de façon classique, des organes d'extraction ou d'insufflation d'air dans différentes pièces, également dénommés bouches d'extraction ou d'insufflation. Dans le cas d'une installation de ventilation mécanique, chaque organe d'extraction est relié à un conduit collecteur commun lui-même connecté à un groupe d'extraction assurant l'aspiration de l'air depuis les pièces concernées. De façon similaire, les bouches d'insufflation peuvent, dans certaines installations, être connectées à un conduit commun par lequel de l'air est insufflé mécaniquement vers les pièces concernées.

Une bouche d'extraction, par exemple, est montée dans un orifice prévu dans une paroi d'une pièce. Elle communique par son extrémité dite avant avec la pièce, et par son extrémité dite arrière avec l'espace situé derrière la paroi, espace dans lequel se situe le conduit collecteur. Lors de la mise en place de l'installation de ventilation, il faut réaliser la liaison entre le conduit collecteur et la bouche d'extraction.

A cet effet, il est connu de réaliser un piquage sur le conduit collecteur et d'utiliser un conduit semi-rigide pour connecter ce piquage et la bouche d'extraction. Ces opérations, qui sont réalisées sur le chantier, ne donnent pas pleinement satisfaction pour les raisons suivantes :
- la jonction du conduit semi-rigide du côté du conduit collecteur et du côté de la bouche d'extraction présente généralement des défauts d'étanchéité pouvant générer des fuites, des pertes de charge et des bruits en fonctionnement ;
- la tenue mécanique entre le conduit semi-rigide et la paroi n'est pas très bonne lors des opérations de montage (impliquant une extension et/ou un déplacement du conduit semi-rigide). Cette tenue mécanique peut en outre s'altérer dans le temps ;
- il est difficile de démonter la bouche d'extraction en vue de son entretien.

La présente invention vise à remédier aux inconvénients mentionnés ci-dessus.

A cet effet, l'invention concerne un système de raccordement entre un organe d'extraction ou d'insufflation d'air dans une pièce d'un bâtiment, monté dans un orifice ménagé dans une paroi de ladite pièce, et une installation de ventilation du bâtiment, ledit système de raccordement comprenant, de façon connue, un conduit semi-rigide destiné à être connecté par son extrémité dite arrière à ladite installation de ventilation.

Selon une définition générale de l'invention, le conduit semi-rigide comprend, au niveau de son extrémité dite avant, un raccord avant sensiblement tubulaire, et le système de raccordement comprend en outre un dispositif de liaison comportant :
- un manchon sensiblement cylindrique, dont le diamètre intérieur correspond sensiblement au diamètre extérieur du raccord avant du conduit semi-rigide, ledit manchon étant destiné à être monté d'une part autour du raccord avant du conduit semi-rigide et d'autre part à l'intérieur de l'orifice ménagé dans la paroi, ledit organe d'extraction ou d'insufflation étant destiné à être introduit, depuis la pièce, dans ledit manchon ;
- des moyens d'assemblage du dispositif de liaison au conduit semi-rigide, comprenant des moyens de blocage aptes à empêcher la translation axiale du dispositif de liaison par rapport au conduit semi-rigide dans les deux sens, en position montée ;
- des premiers moyens de butée agencés pour empêcher, en position montée, un déplacement du dispositif de liaison par rapport à la paroi axialement vers l'avant ;
- et des seconds moyens de butée agencés pour empêcher, en position montée, un déplacement du dispositif de liaison par rapport à la paroi axialement vers l'arrière.

En pratique, le conduit semi-rigide est connecté par son extrémité arrière à l'installation de ventilation. En outre, avant le montage, ce conduit dépasse hors de l'orifice ménagé dans la paroi à l'intérieur de la pièce à équiper et est muni à son extrémité avant du dispositif de liaison. L'opérateur, situé dans la pièce, pousse alors le manchon pour l'insérer dans l'orifice de la paroi. Dans cette position montée, on obtient donc un blocage en translation axiale du dispositif de liaison, dans les deux sens, grâce aux premiers et seconds moyens de butée. L'invention permet de ce fait d'obtenir une très bonne tenue mécanique entre le conduit semi-rigide et la paroi, tenue mécanique qui ne risque pas de se dégrader dans le temps.

L'opérateur peut ensuite très simplement introduire l'organe d'extraction ou d'insufflation dans le dispositif de liaison. Il sera ultérieurement possible de tirer cet organe hors de la paroi, pour son entretien, sans difficulté et sans risque de provoquer le retrait simultané du dispositif de liaison et/ou du conduit semi-rigide.

Par ailleurs, du fait que le conduit semi-rigide comprend un raccord avant, on peut réaliser un montage de bonne qualité entre le conduit semi-rigide et le dispositif de liaison, contrairement à l'art antérieur où le conduit semi-rigide est simplement et grossièrement découpé à la longueur souhaitée et où l'organe d'extraction ou d'insufflation est directement introduit dans l'extrémité avant du conduit semi-rigide.

De plus, du fait que le diamètre extérieur du raccord avant du conduit semi-rigide correspond sensiblement au diamètre intérieur du manchon du dispositif de liaison, on peut réaliser un montage étanche améliorant considérablement les problèmes de fuites, de pertes de charge et de bruits en fonctionnement. Ce montage étanche peut être obtenu par la simple correspondance des diamètres, sans interposition d'un joint.

On peut prévoir que les premiers moyens de butée comprennent au moins un élément qui, en position de repos, fait saillie du manchon vers l'extérieur, et qui est apte à être rabattu contre la face extérieure du manchon, par déformation élastique, lors de l'insertion du dispositif de liaison dans l'orifice depuis la pièce, puis à revenir en position saillante de repos à l'arrière de la paroi lorsque le dispositif de liaison est en position montée dans l'orifice.

Ainsi, lorsque l'opérateur, situé dans la pièce, pousse le manchon pour l'insérer dans l'orifice de la paroi, il provoque de ce fait la déformation du ou des éléments saillants, jusqu'à ce que ce ou ces éléments sortent de l'orifice à l'arrière de la paroi et se redressent vers leur position de repos.

Selon une réalisation avantageuse, les premiers moyens de butée comprennent au moins une languette faisant saillie du manchon selon une direction sensiblement tangentielle contenue dans un plan orthogonal à l'axe du manchon. Le dispositif de liaison est ainsi mis en place dans l'orifice par un mouvement de type « vissage », qui est naturel et requiert une force limitée.

En outre, les moyens d'assemblage du dispositif de liaison au conduit semi-rigide peuvent être agencés pour permettre un montage libre en rotation du dispositif de liaison par rapport au conduit semi-rigide. Dans le cas où le dispositif de liaison est mis en place dans l'orifice de la paroi par un mouvement de rotation, on évite ainsi la torsion du conduit semi-rigide.

Le bord avant de la languette, tourné vers l'extrémité avant du dispositif de liaison, peut être incliné vers l'arrière en direction de l'extrémité libre de la languette. Grâce à cette caractéristique, on peut obtenir un retour progressif de la languette en position saillante de repos. De plus, cela permet au dispositif de liaison de s'adapter à des parois d'épaisseurs différentes dans une certaine gamme.

On peut également prévoir que les premiers moyens de butée comprennent trois éléments sensiblement identiques faisant saillie du manchon vers l'extérieur et disposés à 120° les uns des autres.

Par ailleurs, les seconds moyens de butée comprennent par exemple une collerette faisant saillie radialement vers l'extérieur depuis le bord avant du manchon.

Selon une réalisation possible, les moyens de blocage en translation axiale du dispositif de liaison par rapport au conduit semi-rigide comprennent une collerette faisant saillie radialement vers l'intérieur depuis le bord avant du manchon et/ou au moins une saillie intérieure de clipage ménagée au voisinage du bord arrière du manchon et agencée pour coopérer avec un moyen complémentaire ménagé sur la face extérieure du conduit semi-rigide.

Avantageusement, les premiers moyens de butée peuvent être disposés à une distance du bord avant du manchon sensiblement égale à l'épaisseur de la paroi dans laquelle le dispositif de liaison est destiné à être monté. De la sorte, on assure un très bon maintien axial du dispositif de liaison par rapport à la paroi, sans ballottement.

Par exemple, le raccord avant est fixé au conduit semi-rigide et possède un diamètre extérieur supérieur au diamètre extérieur du conduit semi-rigide, formant ainsi un rebord annulaire arrière destiné à coopérer avec une partie des moyens de blocage en translation axiale du dispositif de liaison par rapport au conduit semi-rigide.

On décrit à présent, à titre d'exemple non limitatif, un mode de réalisation possible de l'invention en référence aux figures annexées :
La figure 1 est une vue schématique en perspective et en éclaté d'une partie d'une installation de ventilation, montrant le système de raccordement selon l'invention entre un conduit collecteur et une bouche d'extraction ;
La figure 2 est une vue en perspective du dispositif de liaison selon l'invention ;
La figure 3 est une vue en perspective du conduit semi-rigide destiné à être assemblé au dispositif de liaison de la figure 2 ;
La figure 4 est une vue en perspective du dispositif de liaison monté sur le conduit semi-rigide ; et
La figure 5 représente l'ensemble de la figure 4 en position montée sur une paroi.

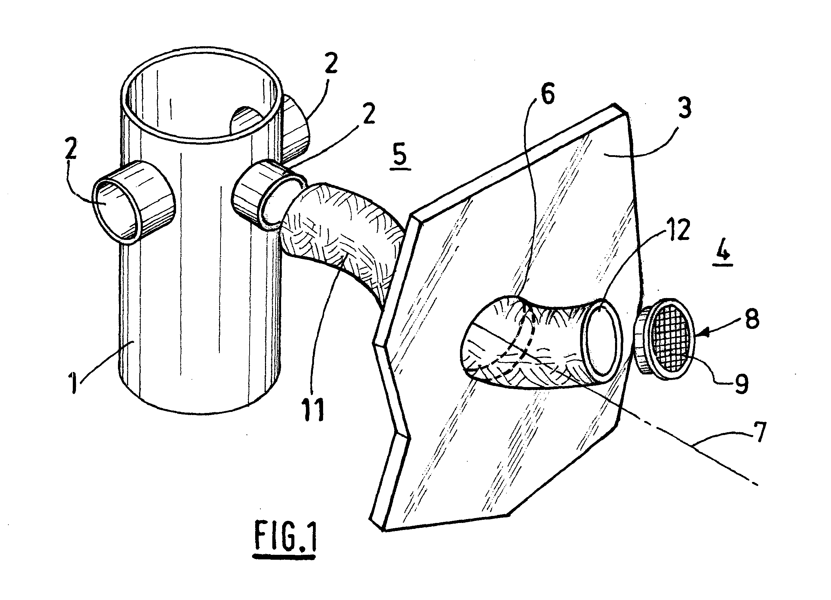

La figure 1 représente un conduit collecteur 1, ici vertical et muni de trois piquages 2 d'axe horizontal, et une paroi 3 délimitant d'un côté une pièce 4 d'un bâtiment et de l'autre un espace technique 5 dans lequel est situé le conduit collecteur 1.

Dans la paroi 3 est ménagé un orifice 6, ici circulaire et d'axe 7, dans lequel sera placé un organe d'extraction ou d'insufflation d'air depuis / vers la pièce 4, généralement de forme complémentaire de celle de l'orifice 6. Dans la réalisation représentée, cet organe est une bouche d'extraction 8 qui peut par exemple comporter une grille 9.

Dans toute la description, on définit les termes « avant » et « arrière » par rapport à l'axe 7 de l'orifice 6, le terme « avant » étant utilisé pour désigner des éléments situés davantage vers la pièce 4 que des éléments désignés par le terme « arrière ».

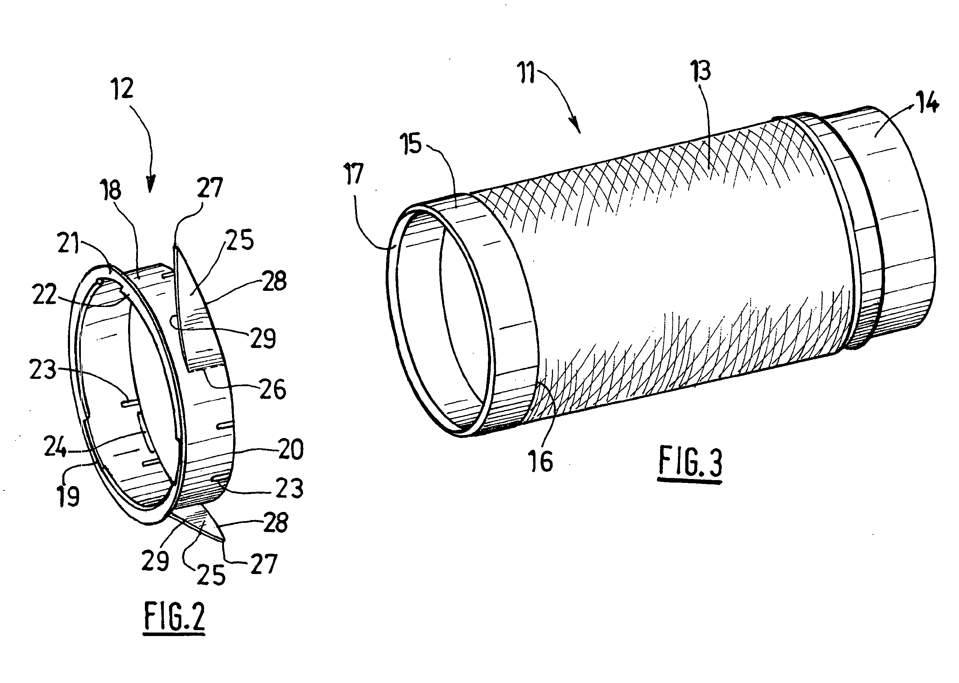

La connexion entre le conduit collecteur 1 et la bouche d'extraction 8 est obtenue par l'intermédiaire d'un conduit semi-rigide 11 et d'un dispositif de liaison 12 qui vont maintenant être décrits en référence aux figures 2 et 3.

Le conduit semi-rigide 11 comprend une partie principale 13 tubulaire semi-rigide, c'est-à-dire suffisamment rigide pour conférer au conduit 11 la résistance mécanique et la tenue imposées par sa fonction, et suffisamment souple pour que le conduit 11 puisse être courbé, en particulier si l'axe 7 de l'orifice 6 et l'axe du piquage 2 correspondant ne sont pas alignés. Avantageusement, le conduit semi-rigide 11 est extensible.

Le conduit semi-rigide 11 est destiné à être connecté, par son extrémité arrière, à l'installation de ventilation. A cet effet, il peut comprendre un raccord arrière 14 pourvu d'un joint (non représenté) agencé pour assurer une connexion étanche avec cette installation, ici avec le piquage 2 souhaité du conduit collecteur 1. Le raccord arrière 14 se présente par exemple sous la forme d'une pièce sensiblement tubulaire, en matière plastique, présentant un diamètre adapté au diamètre du piquage 2. On peut notamment prévoir que le raccord arrière 14 présente un diamètre extérieur sensiblement égal au diamètre intérieur du piquage 2, et qu'il soit pourvu d'un épaulement tourné vers l'arrière, de sorte que le conduit semi-rigide 11 puisse être inséré dans le piquage 2 jusqu'à ce que l'épaulement vienne en butée contre l'extrémité du piquage.

De plus, au niveau de l'extrémité avant du conduit semi-rigide 11 est fixé un raccord avant 15 sensiblement tubulaire, par exemple réalisé en matière plastique, qui possède un diamètre extérieur supérieur au diamètre extérieur de la partie principale 13 du conduit semi-rigide 11. Est ainsi formé un rebord 16 annulaire arrière dont la fonction sera indiquée plus loin. Par ailleurs, le raccord avant 15 possède un bord avant 17 annulaire.

Le dispositif de liaison 12 comprend un manchon 18 sensiblement cylindrique, dont le diamètre intérieur correspond sensiblement au diamètre extérieur du raccord avant 15 du conduit semi-rigide 11, et dont le diamètre extérieur correspond sensiblement au diamètre intérieur de l'orifice 6. Le manchon 18 présente un bord avant 19 et un bord arrière 20. La longueur du manchon 18, c'est-à-dire la distance entre ces bords 19, 20 est voisine de la longueur du raccord 15, entre son bord avant 17 et le rebord 16 annulaire arrière.

Depuis le bord avant 19 du manchon 18 font saillie radialement d'une part une collerette extérieure 21 et d'autre part une collerette intérieure 22.

Par ailleurs, le manchon 18 possède plusieurs fentes 23 axiales pratiquées depuis son bord arrière 20 sur une distance inférieure à la longueur du manchon 18. Dans la réalisation représentée, les fentes 23 sont disposées en trois ensembles de deux fentes espacées l'une de l'autre, les trois ensembles étant situés à 120° les uns des autres. Au voisinage du bord arrière 20 du manchon 18 sont en outre ménagées des saillies intérieures 24 de clipage. Les saillies 24 sont ici au nombre de trois, et sont chacune situées entre deux fentes 23 d'un même ensemble.

Enfin, le dispositif de liaison 12 comprend trois languettes 25 identiques faisant saillie du manchon 18 vers l'extérieur, et disposées à 120° les unes des autres, entre deux ensembles de fentes 23.

Une languette 25 comporte une base 26, par laquelle elle est liée au manchon 18, qui est orientée axialement, et présente une forme effilée de sa base 26 en direction de son extrémité libre 27. De plus, selon une réalisation possible, le bord arrière 28 de la languette 25, tourné vers le bord arrière 20 du manchon 18, est sensiblement orthogonal à l'axe du manchon 18 et le bord avant 29 de la languette 25, tourné vers le bord avant 19 du manchon 18, est incliné vers l'arrière en direction de l'extrémité libre 27 de la languette 25. Le bord avant 29 de la languette 25 peut être droit ou courbe. L'extrémité avant de la base 26 de la languette 25 est située à une distance du bord avant 19 du manchon 18 sensiblement égale à l'épaisseur de la paroi 3.

Au repos, c'est-à-dire lorsqu'aucune contrainte n'est appliquée sur les languettes, chaque languette 25 est située sensiblement dans un plan tangent au manchon 18 et est orientée, de sa base 26 vers son extrémité libre 27, selon une direction sensiblement tangentielle contenue dans un plan orthogonal à l'axe du manchon 18. Les languettes 25 sont toutefois suffisamment souples pour pouvoir être déformées élastiquement de façon à être rabattues contre la face extérieure du manchon 18.

Le dispositif de liaison 12, c'est-à-dire en particulier le manchon 18 et les languettes 25, peut être réalisé d'une seule pièce par moulage d'une matière plastique.

On décrit à présent la mise en place du dispositif de liaison 12 et du conduit semi-rigide 11 par un opérateur sur le chantier.

Le conduit semi-rigide 11 est raccordé de façon étanche au piquage 2 du conduit collecteur 1, au moyen du raccord arrière 14 généralement pourvu d'un joint. En outre, le conduit semi-rigide 11 passe à travers l'orifice 6 ménagé dans la paroi 3, de manière à dépasser à l'intérieur de la pièce 4, dans laquelle se situe l'opérateur.

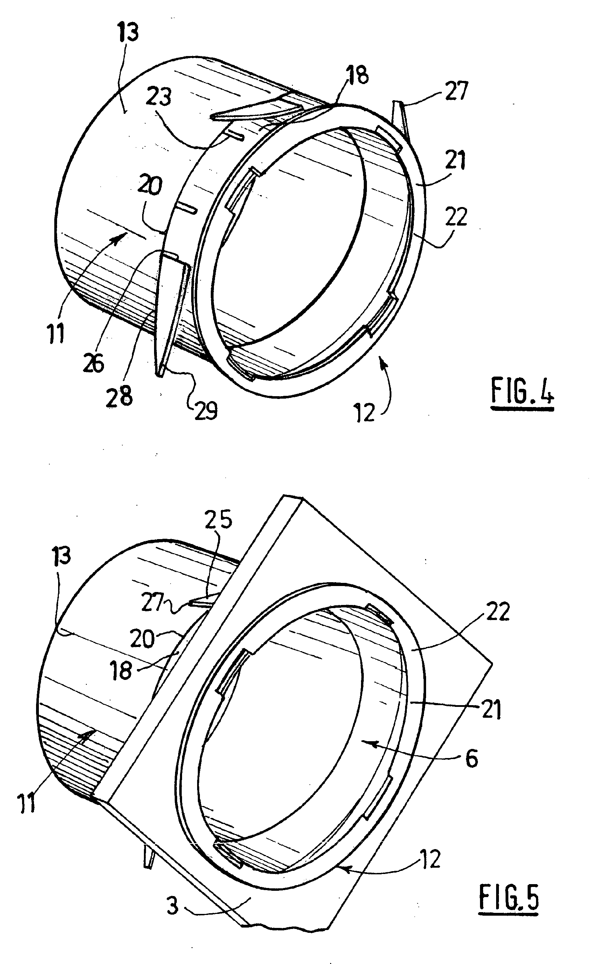

La mise en place du dispositif de liaison 12 sur le conduit semi-rigide 11, qui peut être effectuée à ce stade, est obtenue comme suit. Le manchon 18 est monté autour du raccord avant 15 et déplacé axialement vers l'arrière. Au cours de ce mouvement, du fait de la présence des saillies intérieures 24 de clipage glissant sur la face extérieure du raccord avant 15 et des diamètres respectifs, le manchon 18 s'évase légèrement en tronc de cône depuis son bord arrière 20, ce qui est rendu possible par l'existence des fentes 23. Le déplacement vers l'arrière du manchon 18 autour du dispositif de liaison 12 est poursuivi jusqu'à ce que la collerette intérieure 22 vienne en butée contre le bord avant 17 du raccord avant 15 et que les saillies intérieures 24 de clipage passent à l'arrière du rebord 16 annulaire arrière du raccord avant 15. En position montée sur le conduit semi-rigide 11 (figure 4), le manchon 18 a repris sa forme sensiblement cylindrique. Il est bloqué en translation axiale à la fois vers l'avant et vers l'arrière, mais reste libre de tourner par rapport au conduit semi-rigide 11, autour de leur axe commun. Les diamètres des pièces sont ajustés pour que la liaison entre le conduit semi-rigide 11 et le manchon 18 soit étanche. La présence d'un joint n'est pas nécessaire pour assurer cette étanchéité. Les languettes 25 sont en saillie.

L'opérateur procède ensuite au montage du dispositif de liaison 12 dans l'orifice 6 de la paroi 3. A cet effet, il pousse l'ensemble dispositif de liaison 12 et conduit semi-rigide 11 vers l'arrière, faisant ainsi progressivement rentrer le conduit semi-rigide 11 dans l'espace technique 5. De plus, pour insérer le dispositif de liaison 12 dans l'orifice 6, il tourne le manchon 18 dans le sens approprié, selon l'orientation des languettes 25, à savoir dans le sens allant de leur extrémité libre 27 à leur base 26. Dans la réalisation représentée, l'opérateur tourne le manchon 18 dans le sens des aiguilles d'une montre, ce qui correspond à un mouvement naturel de vissage.

Les languettes 25, venant en contact avec la face intérieure de l'orifice 6, sont alors rabattues contre la face extérieure du manchon 18 et autorisent la poursuite du mouvement de rotation du dispositif de liaison 12. Il est à noter que cette rotation du dispositif de liaison 12 par rapport à la paroi 3 n'entraîne pas la mise en torsion du conduit semi-rigide 11 du fait du montage libre en rotation du dispositif de liaison 12 par rapport au conduit semi-rigide 11.

Ce mouvement est poursuivi jusqu'à ce que la collerette extérieure 21 vienne en butée contre la face avant (tournée vers la pièce 4) de la paroi 3. Dans cette position (figure 5), les languettes 25 sont entièrement situées de l'autre côté de la paroi 3, dans l'espace technique 5, et ont repris par élasticité leur position saillante de repos. Ainsi, le dispositif de liaison 12 est bloqué en translation par rapport à la paroi 3, vers l'avant et vers l'arrière. La mise en place et le verrouillage du dispositif de liaison 12 dans l'orifice 6 a été réalisé avec un accès d'un seul côté de la paroi 3.

Il est à noter que les languettes 25 pourraient être remplacées par tout autre moyen permettant de maintenir le dispositif de liaison fixé à la paroi 3. Par exemple, il pourrait être prévu un manchon dépourvu de languettes et dont la collerette 21 est vissée dans la paroi 3.

Il ne reste plus à l'opérateur qu'à insérer la bouche d'extraction 8 dans le manchon 18, qui est bloqué dans la paroi 3. Des moyens de maintien amovible (encliquetage par exemple) peuvent être prévus pour empêcher un retrait intempestif de la bouche d'extraction 8 hors du manchon 18 mais autoriser un retrait volontaire pour nettoyage, notamment.

Ainsi, grâce au dispositif de liaison selon l'invention, on peut assurer, du côté de la bouche d'extraction, à la fois l'étanchéité avec cette bouche et la tenue mécanique dans la paroi, généralement en plaque à base de plâtre. L'invention permet de couvrir, avec une seule référence, la majeure partie des longueurs de raccordement (le conduit semi-rigide pouvant être orienté, courbé et même étendu). La connexion du circuit semi-rigide côté circuit collecteur et côté dispositif de liaison est très simple et ne perturbe pas les procédures actuellement utilisées sur les chantiers. L'invention permet en outre de disposer d'un produit industrialisé, fabriqué en usine, non soumis aux aléas de fabrication sur chantier.

Il va de soi que l'invention n'est pas limitée au mode de réalisation décrit ci-dessus à titre d'exemple mais qu'elle en embrasse au contraire toutes les variantes de réalisation.

## Revendications

1. Système de raccordement entre un organe d'extraction (8) ou d'insufflation d'air dans une pièce (4) d'un bâtiment, monté dans un orifice (6) ménagé dans une paroi (3) de ladite pièce (4), et une installation de ventilation du bâtiment, ledit système de raccordement comprenant un conduit semi-rigide (11) destiné à être connecté par son extrémité dite arrière à ladite installation de ventilation, **caractérisé en ce que** le conduit semi-rigide (11) comprend, au niveau de son extrémité dite avant, un raccord avant (15) sensiblement tubulaire et **en ce que** le système de raccordement comprend en outre un dispositif de liaison (12) comportant :
- un manchon (18) sensiblement cylindrique, dont le diamètre intérieur correspond sensiblement au diamètre extérieur du raccord avant (15) du conduit semi-rigide (11), ledit manchon étant destiné à être monté d'une part autour du raccord avant (15) du conduit semi-rigide (11) et d'autre part à l'intérieur de l'orifice (6) ménagé dans la paroi (3), ledit organe d'extraction (8) ou d'insufflation étant destiné à être introduit, depuis la pièce (4), dans ledit manchon (18) ;
- des moyens d'assemblage du dispositif de liaison (12) au conduit semi-rigide (11), comprenant des moyens de blocage (22, 24) aptes à empêcher la translation axiale du dispositif de liaison (12) par rapport au conduit semi-rigide (11) dans les deux sens, en position montée ;
- des premiers moyens de butée agencés pour empêcher, en position montée, un déplacement du dispositif de liaison (12) par rapport à la paroi (3) axialement vers l'avant ;
- et des seconds moyens de butée (21) agencés pour empêcher, en position montée, un déplacement du dispositif de liaison (12) par rapport à la paroi (3) axialement vers l'arrière.

2. Système de raccordement selon la revendication 1, **caractérisé en ce que** les premiers moyens de butée comprennent au moins un élément (25) qui, en position de repos, fait saillie du manchon (18) vers l'extérieur, et qui est apte à être rabattu contre la face extérieure du manchon (18), par déformation élastique, lors de l'insertion du dispositif de liaison (12) dans l'orifice (6) depuis la pièce (4), puis à revenir en position saillante de repos à l'arrière de la paroi (3) lorsque le dispositif de liaison (12) est en position montée dans l'orifice (6).

3. Système de raccordement selon la revendication 1 ou 2, **caractérisé en ce que** les premiers moyens de butée comprennent au moins une languette (25) faisant saillie du manchon (18) selon une direction sensiblement tangentielle contenue dans un plan orthogonal à l'axe du manchon (18).

4. Système de raccordement selon l'une des revendications 1 à 3, **caractérisé en ce que** les moyens d'assemblage du dispositif de liaison (12) au conduit semi-rigide (11) sont agencés pour permettre un montage libre en rotation du dispositif de liaison (12) par rapport au conduit semi-rigide (11).

5. Système de raccordement selon la revendication 3 ou 4, **caractérisé en ce que** la languette (25) comporte une base (26), par laquelle elle est liée au manchon (18), qui est orientée axialement, et **en ce qu'**elle présente une forme effilée de sa base (26) en direction de son extrémité libre (27).

6. Système de raccordement selon l'une des revendications 3 à 5, **caractérisé en ce que** le bord arrière (28) de la languette (25), tourné vers l'extrémité arrière du dispositif de liaison (12), est sensiblement orthogonal à l'axe du manchon (18).

7. Système de raccordement selon l'une des revendications 3 à 6, **caractérisé en ce que** le bord avant (29) de la languette (25), tourné vers l'extrémité avant du dispositif de liaison (12), est incliné vers l'arrière en direction de l'extrémité libre (27) de la languette (25).

8. Système de raccordement selon l'une des revendications 1 à 7, **caractérisé en ce que** les premiers moyens de butée comprennent trois éléments (25) sensiblement identiques faisant saillie du manchon (18) vers l'extérieur et disposés à 120° les uns des autres.

9. Système de raccordement selon l'une des revendications 1 à 8, **caractérisé en ce que** les seconds moyens de butée comprennent une collerette (21) faisant saillie radialement vers l'extérieur depuis le bord avant (19) du manchon (18).

10. Système de raccordement selon l'une des revendications 1 à 9, **caractérisé en ce que** les moyens de blocage en translation axiale du dispositif de liaison (12) par rapport au conduit semi-rigide (11) comprennent une collerette (22) faisant saillie radialement vers l'intérieur depuis le bord avant (19) du manchon (18) et/ou au moins une saillie intérieure de clipage (24) ménagée au voisinage du bord arrière (20) du manchon (18) et agencée pour coopérer avec un moyen complémentaire (16) ménagé sur la face extérieure du conduit semi-rigide (11).

11. Système de raccordement selon l'une des revendications 1 à 10, **caractérisé en ce que** les premiers moyens de butée (25) sont disposés à une distance du bord avant du manchon (18) sensiblement égale à l'épaisseur de la paroi (3) dans laquelle le dispositif de liaison (12) est destiné à être monté.

12. Système de raccordement selon l'une des revendications 1 à 11, **caractérisé en ce que** le raccord avant (15) est fixé au conduit semi-rigide (11) et possède un diamètre extérieur supérieur au diamètre extérieur du conduit semi-rigide (11), formant ainsi un rebord annulaire arrière (16) destiné à coopérer avec une partie (24) des moyens de blocage en translation axiale du dispositif de liaison (12) par rapport au conduit semi-rigide (11).

13. Système de raccordement selon l'une des revendications 1 à 12, **caractérisé en ce que** le conduit semi-rigide (11) comprend un raccord arrière (14) pourvu d'un joint agencé pour assurer une connexion étanche avec l'installation de ventilation.
